(19) Europäisches Patentamt
European Patent Office
Office européen des brevets

(11) Veröffentlichungsnummer: **0 043 937**
**B1**

(12) # EUROPÄISCHE PATENTSCHRIFT

(45) Veröffentlichungstag der Patentschrift: **19.09.84**

(51) Int. Cl.³: **C 09 B 29/42** // C08K5/23

(21) Anmeldenummer: **81104700.0**

(22) Anmeldetag: **19.06.81**

(54) **Anthrachinonazo-Verbindungen, Verfahren zu ihrer Herstellung sowie ihre Verwendung.**

(30) Priorität: **01.07.80 DE 3024857**

(43) Veröffentlichungstag der Anmeldung: **20.01.82 Patentblatt 82/3**

(45) Bekanntmachung des Hinweises auf die Patenterteilung: **19.09.84 Patentblatt 84/38**

(84) Benannte Vertragsstaaten: **CH DE FR GB LI**

(56) Entgegenhaltungen:
**EP-A-0 023 617**
**DE-A-1 932 806**
**DE-A-1 932 809**
**FR-A-2 381 807**

(73) Patentinhaber: **BAYER AG, Konzernverwaltung RP Patentabteilung, D-5090 Leverkusen 1 Bayerwerk (DE)**

(72) Erfinder: **Rolf, Meinhard, Dr., Berta-von-Suttner-Strasse 24, D-5090 Leverkusen (DE)**
Erfinder: **Neeff, Rütger, Dr., Berta-von-Suttner-Strasse 22, D-5090 Leverkusen (DE)**
Erfinder: **Müller, Walter, Ing. grad., Pfarrer-Klein-Strasse 3, D-5090 Leverkusen 3 (DE)**

**EP 0 043 937 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Anthrachinonazo-Verbindungen, die in einer ihrer tautomeren Strukturen der Formel

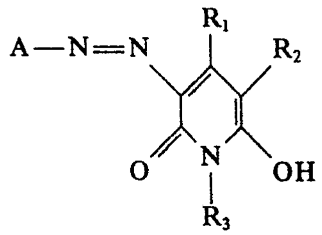

(I)

entsprechen, Verfahren zu ihrer Herstellung sowie ihre Verwendung als Pigmente.

Weitere tautomere Formen der erfindungsgemäßen Verbindungen entsprechen z. B. den Formeln

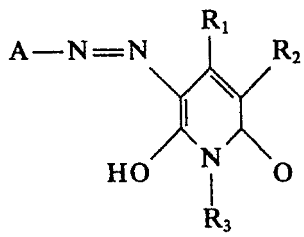

(Ia)

und

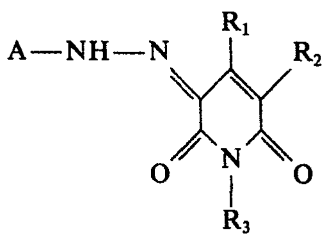

(Ib)

Der Einfachheit halber wird im Folgenden jeweils nur die in Formel (I) dargestellte tautomere Form genannt, was aber keine Einschränkung der Erfindung bezüglich eines bestimmten Tautomeren bedeutet.

In der Formel bedeuten

A einen von Sulfonsäuregruppen freien, gegebenenfalls weitersubstituierten $\alpha$-Anthrachinonrest oder einen von Sulfonsäuregruppen freien, gegebenenfalls weitersubstituierten, heterocyclischen Anthrachinonrest, der vorzugsweise aus höchstens 5 kondensierten Ringen besteht,

$R_1$ Wasserstoff, Alkyl, Aryl oder Hydroxy,

$R_2$ Wasserstoff, Halogen, Nitro, Cyan, gegebenenfalls substituiertes Carbamoyl, gegebenenfalls substituiertes Sulfamoyl, Alkylcarbonyl, Alkoxycarbonyl, Alkan- oder gegebenenfalls substituiertes Benzolsulfonyl oder einen heteroaromatischen Rest, wobei jedoch $R_1$, $R_2$ nicht gleichzeitig Wasserstoff bezeichnen können,

$R_3$ einen gegebenenfalls durch Hydroxy, $C_1-C_4$-Alkoxy, Phenyl, Carbamoyl oder $C_1-C_4$-Alkylcarbamoyl substituierten $C_1-C_6$-Alkylrest, einen gegebenenfalls substituierten Cycloalkylrest, einen gegebenenfalls substituierten Aralkylrest oder einen gegebenenfalls substituierten Arylrest.

A bezeichnet vorzugsweise einen $\alpha$-Anthrachinon-, Anthrapyridon-, Anthrapyrimidin-, Pyrazolanthron-, Phthaloylacridon-, Phthaloylbenzimidazol-, oder Isothiazolanthron-Rest. Als Substituenten der heterocyclischen Reste seien beispielhaft Phenyl, Amino, Halogen, insbesondere Chlor und Brom, und $C_1-C_4$-Alkyl, insbesondere Methyl, genannt. Die heterocyclischen Reste sind frei von Sulfonsäuregruppen.

$R_1$ bezeichnet bevorzugt Wasserstoff, $C_1-C_4$-Alkyl, Phenyl oder Hydroxy,

$R_2$ bezeichnet bevorzugt Wasserstoff, Chlor, Brom, Fluor, Nitro, Cyan, ($C_1-C_4$-Alkyl)-carbonyl, ($C_1-C_4$-Alkoxy)-carbonyl, $C_1-C_4$-Alkansulfonyl oder gegebenenfalls durch $C_1-C_4$-Alkyl, $C_1-C_4$-Alkoxy, Fluor, Chlor, Brom, Nitro oder Carbamoyl substituiertes Benzolsulfonyl oder einen

heteroaromatischen Rest der Formeln

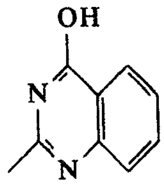
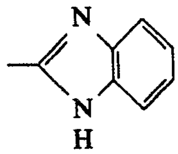
oder
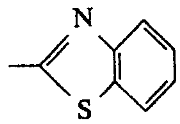

(II) (III) (IV)

oder einen Rest der Formeln

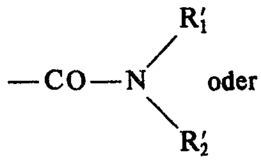
oder
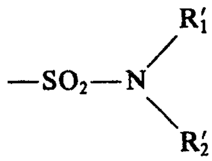
,

stehen wobei

$R_1'$, $R_2'$ für Wasserstoff, $C_1-C_4$-Alkyl, Phenyl und Benzyl stehen und die aromatischen Reste durch $C_1-C_4$-Alkyl, $C_1-C_4$-Alkoxy, Fluor, Chlor, Brom, Nitro oder Carbamoyl substituiert sein können, wobei jedoch $R_1$, $R_2$ nicht gleichzeitig für Wasserstoff stehen können.

$R_3$ bezeichnet bevorzugt einen gegebenenfalls substituierten $C_3-C_7$-Cycloalkylrest, einen gegebenenfalls substituierten Phenylrest oder einen gegebenenfalls substituierten Benzylrest, besonders bevorzugt einen $C_1-C_6$-Alkylrest, der beispielsweise durch Hydroxy, $C_1-C_4$-Alkoxy, Phenyl oder einen gegebenenfalls durch $C_1-C_4$-Alkyl substituierten Carbamoyloxyrest substituiert sein kann oder einen Cyclopentyl-, Cyclohexy- oder Benzylrest.

Azopigmente aus Pyridon-Kupplungskomponenten sind bereits in der DE-OS 2 216 207 beschrieben. Überraschenderweise wurde nun gefunden, daß die Anthrachinonazo-Pigmente der Formel (I) bei hoher Farbstärke ausgezeichnete Echtheiten, insbesondere Licht- und Wetterechtheiten besitzen und daher eine Bereicherung der Technik darstellen.

Farbstoffe aus Pyridon-Kupplungskomponenten sind weiterhin aus der FR-A 2 381 807 und der DE-A 1 932 809 bekannt. Dabei handelt es sich jedoch um Dispersionsfarbstoffe, wie die offenbarte gute Eignung zum Färben von synthetischen Textilmaterialien zeigt.

Demgegenüber handelt es sich bei den erfindungsgemäßen Verbindungen um Pigmente, die sich durch ihre Unlöslichkeit im Anwendungsmedium auszeichnen. Diese Eigenschaft führt zu den typischen Pigmenteigenschaften wie Lösungsmittelechtheit, Überlackierechtheit, Überspritzechtheit und Ölechtheit.

Zur Herstellung der Anthrachinon-Derivate (I) werden Aminoanthrachinone der Formel

$$A-NH_2 \qquad (V)$$

in der A die oben angegebene Bedeutung besitzt, diazotiert und mit Kupplungskomponenten der Formel

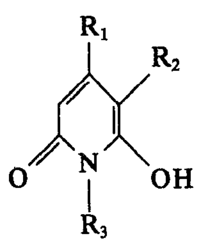
(VI)

in der $R_1$, $R_2$ und $R_3$ die oben angegebene Bedeutung haben, umgesetzt.

Geeignete Aminoanthrachinone der Formel (V) sind z. B.:

1-Aminoanthrachinon, 1-Amino-2-chloranthrachinon, 1-Amino-4-chloranthrachinon, 1-Amino-5-chloranthrachinon, 1-Amino-6-chloranthrachinon, 1-Amino-6-(7)-chloranthrachinon (Gemisch) 1-Amino-5.8-dichloranthrachinon, 1-Amino-2-bromanthrachinon, 1-Amino-2.4-dibromanthrachinon, 1-Amino-6.7-dichloranthrachinon, 1-Amino-6-fluoranthrachinon, 1-Amino-7-fluoranthrachinon, 1-Amino-6.7-difluoranthrachinon,

1-Amino-4-nitroanthrachinon, 1-Amino-5-nitroanthrachinon, 1-Amino-2-methylanthrachinon, 1-Amino-2-methyl-4-chloranthrachinon, 1-Amino-2-methyl-4-bromanthrachinon, 1-Aminoanthrachinon-2-carbsonäure, 1-Aminoanthrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-5-benzoylamino-anthrachinon, 1-Amino-4-benzoylaminoanthrachinon, 1-Amino-8-benzoylaminoanthrachinon, 1-Amino-5-(2-chlorbenzoylamino)-anthrachinon, 1-Amino-5-(3-chlorbenzoylamino)-anthrachinon, 1-Amino-5-(4-chlorbenzoylamino)-anthrachinon, 1-Amino-5-(2.5-dichlorbenzoylamino)-anthrachinon, 1-Amino-5-(3-nitrobenzoylamino)-anthrachinon, 1-Amino-4-(2-chlorbenzoylamino)-anthrachinon, 1-Amino-4-(3-chlorbenzoylamino)-anthrachinon, 1-Amino-4-(4-chlorbenzoylamino)-anthrachinon, 1-Amino-4-(2.5-dichlorbenzoylamino)-anthrachinon, 1-Amino-4-(3-nitrobenzoylamin)-anthrachinon, 1-Amino-8-(2-chlorbenzoylamino)-anthrachinon, 1-Amino-8-(3-chlorbenzoylamino)-anthrachinon, 1-Amino-8-(4-chlorbenzoylamino)-anthrachinon, 1-Amino-8-(2.5-dichlorbenzoylamino)-anthrachinon, 1-Amino-8-(-nitrobenzoylamino)-anthrachinon, 1-Amino-2-methyl-4-benzoylamino-anthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-cyclohexylaminoanthrachinon, 1-Amino-4-anilinoanthrachinon, 1-Amino-6-methylmercaptoanthrachinon, 2-Phenyl-6-amino-4.5-phthaloylbenzimidazol, 6-Chlor-2-amino-3.4-phthaloylacridon, 7-Chlor-2-amino-3.4-phthaloylacridon, 5-Chlor-8-amino-3.4-phthaloylacridon, 3-Methyl-6-amino-anthrapyridon, 3-Methyl-7-amino-anthrapyridon, 4-Amino-1.9-pyrazolanthron, 5-Amino-1.9-pyrazolanthron, 4-Amino-1.9-anthrapyrimidin, 5-Amino-1.9-anthrapyrimidin und 5-Amino-isothiazolanthron.

Bevorzugte Anthrachinonazo-Verbindungen entsprechen der Formel

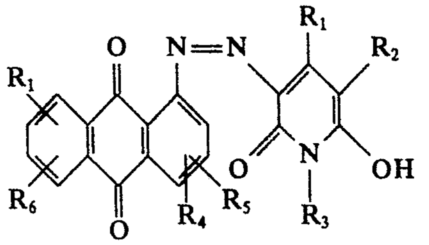

(VII)

worin

$R_1$, $R_2$ und $R_3$ die oben genannte Bedeutung haben und

$R_4$ Wasserstoff, Fluor, Chlor oder Brom, Nitro, $C_1-C_4$-Alkyl, $C_1-C_4$-Alkoxy, $C_1-C_4$-Alkylamino, Benzylamino, Cyclohexylamino, $C_1-C_4$-Alkyl-mercapto, gegebenenfalls durch $C_1-C_4$-Alkyl, $C_1-C_4$-Alkoxy, Fluor, Chlor, Brom oder Nitro substituiertes Phenylmercapto, ($C_1-C_4$-Alkyl-)-carbonyl, ($C_1-C_4$-Alkoxy-)-carbonyl, gegebenenfalls durch $C_1-C_4$-Alkyl, $C_1-C_4$-Alkoxy, Chlor oder Nitro substituiertes Phenylamino, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom, Nitro oder Carbonamid substituiert sein kann, Carboxy, Hydroxy, ($C_1-C_4$-Alkyl-)carbonylamino, gegebenenfals durch $C_1-C_4$-Alkyl, $C_1-C_4$-Alkoxy, Fluor, Chlor, Brom oder Nitro substituiertes Benzoylamino oder gegebenenfalls durch $C_1-C_4$-Alkyl, $C_1-C_4$-Alkoxy, Fluor, Chlor, Brom oder Nitro substituiertes Benzolsulfonylamino,

$R_5$ Wasserstoff, $C_1-C_4$-Alkyl insbesondere Methyl, Fluor, Chlor oder Brom oder Hydroxy,

$R_6$ Wasserstoff, Fluor, Chlor oder Brom, Nitro, $C_1-C_4$-Alkyl, $C_1-C_4$-Alkoxy, $C_1-C_4$-Alkylamino, $C_1-C_4$-Alkylmercapto, gegebenenfalls durch $C_1-C_4$-Alkyl, $C_1-C_4$-Alkoxy, Fluor, Chlor, Brom oder Nitro substituiertes Phenylmercapto, ($C_1-C_4$-Alkoxy)-carbonyl, ($C_1-C_4$-Alkyl-)carbonyl, Benzylamino, Cyclohexylamino, gegebenenfalls durch $C_1-C_4$-Alkyl, $C_1-C_4$-Alkoxy, Chlor, Brom oder Nitro substituiertes Phenylamino, Carboxy, Hydroxy, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom oder Nitro substituiert sein kann, ($C_1-C_4$-Alkyl-)carbonylamino, gegebenenfalls durch $C_1-C_4$-Alkyl, $C_1-C_4$-Alkoxy, Fluor, Chlor, Brom oder Nitro substituiertes Benzoylamino, $C_1-C_4$-Alkansulfonylamino oder gegebenenfalls durch $C_1-C_4$-Alkyl, $C_1-C_4$-Alkoxy, Fluor, Chlor, Brom oder Nitro substituiertes Benzolsulfonylamino und

$R_7$ Wasserstoff, Fluor, Chlor oder Brom oder Hydroxy bedeuten.

Besonders bevorzugte Anthrachinonazo-Verbindungen entsprechen der Formel

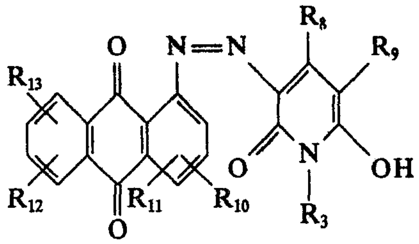

(VIII)

worin

$R_3$ die oben genannte Bedeutung hat und
$R_8$ Wasserstoff, Methyl oder Hydroxy,
$R_9$ Wasserstoff, Cyan, gegebenenfalls durch $C_1$—$C_4$-Alkyl mono- oder disubstituiertes Carbamoyl oder Chlor, wobei jedoch $R_8$, $R_9$ nicht gleichzeitig für Wasserstoff stehen können,
$R_{10}$ Wasserstoff, Methyl, Chlor, Brom, Nitro, Acetyl, ($C_1$—$C_4$-Alkoxy)-carbonyl, gegebenenfalls durch $C_1$—$C_4$-Alkyl oder Phenyl substituiertes Carbamoyl, wobei Phenyl durch $C_1$—$C_4$-Alkyl, $C_1$—$C_4$-Alkoxy, Chlor, Brom oder Nitro substituiert sein kann, Carboxy, $C_1$—$C_4$-Alkyl-carbonylamino oder gegebenenfalls durch $C_1$—$C_4$-Alkyl, $C_4$—$C_4$-Alkoxy, Chlor, Brom oder Nitro substituiertes Benzoylamino,
$R_{11}$ Wasserstoff, Methyl oder Hydroxy,
$R_{12}$ Wasserstoff, Chlor, Brom, Nitro, Hydroxy $C_1$-$C_1$—$C_4$-Alkylcarbonylamino, gegebenenfalls durch $C_1$—$C_4$-Alkyl, $C_1$—$C_4$-Alkoxy, Chlor, Brom oder Nitro substituiertes Benzoylamino, Carboxy, $C_1$—$C_4$-Alkoxycarbonyl oder gegebenenfalls durch $C_1$—$C_4$-Alkyl oder Phenyl substituiertes Carbamoyl, wobei Phenyl durch $C_1$—$C_4$-Alkyl, $C_1$—$C_4$-Alkoxy, Chlor, Brom oder Nitro weitersubstituiert sein kann und
$R_{13}$ Wasserstoff, Chlor, Hydroxy oder Nitro bedeuten.

Ganz besonders bevorzugte Anthrachinonazo-Verbindungen entsprechen der Formel

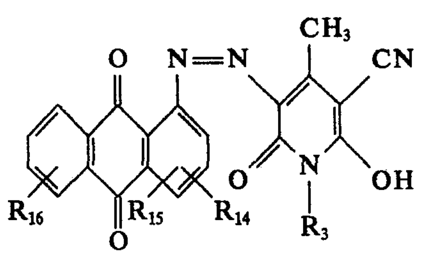

(IX)

worin

$R_3$ die oben genannte Bedeutung hat und
$R_{14}$ Wasserstoff, Hydroxy oder gegebenenfalls durch Chlor oder Nitro substituiertes Benzoylamino,
$R_{15}$ Wasserstoff oder Methyl und
$R_{16}$ Wasserstoff, Chlor oder gegebenenfalls durch Chlor oder Nitro substituiertes Benzoylamino bedeuten.

Von besonderem Interesse sind weiterhin Anthrachinonazo-Verbindungen der Formel

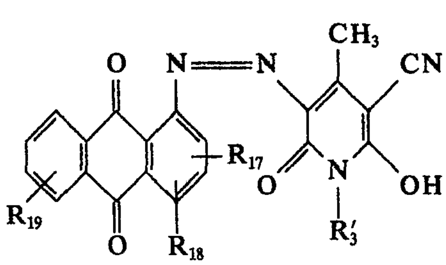

(XV)

worin

$R_{3'}$ $C_1$—$C_6$-Alkyl oder Benzyl,
$R_{17}$ Wasserstoff, Hydroxy oder gegebenenfalls durch Chlor oder Nitro substituiertes Benzoylamino,

$R_{18}$ Wasserstoff oder Methyl und
$R_{19}$ Wasserstoff, Chlor oder gegebenenfalls durch Chlor oder Nitro substituiertes Benzoylamino bedeuten.

Weitere bevorzugte Verbindungen entsprechen der Formel

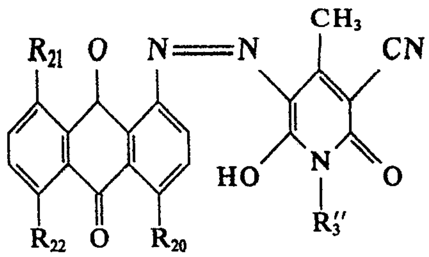

(XVI)

in der

$R_3''$ $C_1-C_4$-Alkyl und
$R_{20}$, $R_{21}$, $R_{22}$ Wasserstoff oder Benzoylamino, wobei höchstens einer der Reste $R_{20}$, $R_{21}$ und $R_{22}$ für Benzoylamino steht, bedeuten.

Die Herstellung der Anthrachinonazo-Verbindungen der Formel (I) kann nach mehreren Verfahren erfolgen.

1. Man überführt das Aminoanthrachinon der Formel

$$A-NH_2 \qquad \text{(V)}$$

nach bekannten Verfahren in das Diazoniumsalz, z. B. mit Nitrosyl-Schwefelsäure oder durch Eintropfen der schwefelsauren Lösung in eine wäßrige Natriumnitrit-Lösung und kuppelt die erhaltene Suspension des Diazoniumsulfats bei 0° —90° C mit einer Kupplungskomponente der Formel

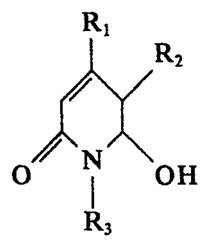

(X)

wobei $R_1$, $R_2$ und $R_3$ die oben genannte Bedeutung besitzen.

2. In Abänderung dieses Verfahrens kann man nach der Diazotierung das Diazoniumsalz aus der wäßrigen Suspension durch Filtration isolieren und in Wasser oder in einem organischen Lösungsmittel nach Zusatz einer anorganischen oder organischen Säure mit einer Kupplungskomponente der Formel (X) zum Azopigment umsetzen. Zur Reinigung des Farbstoffes schließt sich gegebenenfalls eine Temperung bei 60° —200° C in demselben oder einem anderen organischen Lösungsmittel an. Als organische Lösungsmittel für die Kupplungsreaktion eignen sich Alkohole wie Methanol, Ethanol oder Glykolmonomethylether, Aromaten wie Toluol, 1.2-Dichlorbenzol, Nitrobenzol oder Pyridin und dipolar aprotische Lösungsmittel wie Dimethylformamid, N-Methylpyrrolidon, Dimethylsulfoxid oder Tetramethylensulfon. Geeignete Säuren zur Katalyse der Kupplungsreaktion sind z. B. anorganische Säuren wie Schwefelsäure, Phosphorsäure oder Salzsäure, organische Carbonsäuren wie Ameisensäure, Essigsäure, Chloressigsäure, Oxalsäure, Maleinsäure, 2.4-Dichlorbenzoesäure oder Terephthalsäure, p-Toluolsulfonsäure oder Naphthalin-2.6-disulfonsäure.
3. Man löst oder suspendiert das Aminoanthrachinon der Formel (V) in einem organischen Lösungsmittel und diazotiert nach Zusatz einer anorganischen oder organischen Säure mit einem organischen Nitrit wie Methylnitrit oder Amylnitrit oder mit Natriumnitrit, das als wäßrige Lösung oder auch kristallin eingesetzt werden kann. Anschließend kuppelt man ohne Isolierung auf eine Kupplungskomponente der Formel (X). Zweckmäßigerweise schließt sich auch hier eine Temperung des erhaltenen Pigmentes an. Die für dieses Verfahren geeigneten organischen Lösungsmittel und anorganischen bzw. organischen Säure entsprechenden den bei Verfahren 2 genannten Verbindungen.

4. Die Herstellung der Kupplungskomponenten der Formel (X) erfolgt meistens in Wasser. Ein weiteres Herstellungsverfahren für die Anthrachinonazo-Verbindungen der Formel (I) besteht darin, daß man auf die Isolierung und Reinigung der Kupplungskomponente verzichtet und deren wäßrige Suspension unmittelbar mit dem Diazoniumsalz eines Aminoanthrachinons der Formel (V) zum Azopigment umsetzt. Zweckmäßigerweise beschleunigt man die Kupplungsreaktion durch Erwärmen, vorzugsweise auf 50—100°C.

Die Kupplungskomponenten der Formel (X) und ihre Herstellung sind in der Literatur beschrieben. In den meisten Fällen erfolgt die Synthese durch Kondensation des Amids (XI) mit dem β-Ketoester (XII) unter Alkalikatalyse

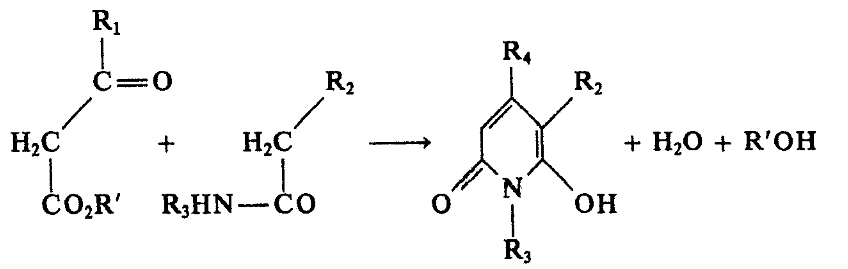

(XII) (XI) (X)

In den Formeln (X), (XI) und (XII) haben $R_1$, $R_2$ und $R_3$ die oben genannte Bedeutung. R' bezeichnet beispielsweise einen $C_1-C_4$-Alkylrest.

Die Verbindungen der Formel (I) fallen in einer für die Pigmentanwendung geeigneten Form an oder können durch an sich bekannte Nachbehandlungsverfahren in die geeignete Form überführt werden, z. B. durch Lösen oder Quellen in starken anorganischen Säuren wie Schwefelsäure und Austragen auf Eis. Die Feinverteilung kann auch durch Mahlen mit oder ohne Mahlhilfsstoffen wie anorganischen Salzen oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigmentes können durch Variation der Nachbehandlung beeinflußt werden.

Die Farbstoffe der Formel (I) eignen sich aufgrund ihrer Licht- und Migrationsechtheit für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen können z. B. solche mit anorganischen Weißpigmenten wie Titandioxid (Rutil) oder mit Zement verstanden werden. Zubereitungen sind z. B. Flushpasten mit organischen Flüssigkeiten oder Teige und Feinteige mit Wasser, Dispergiermitteln und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannte seien plastische Massen wie Polyvinylchlorid, Polyvinylacetat, Polyvinylpropionat, Polyolefine z. B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

Die Pigmente der Formel (I) sind weiterhin ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig und in plastischen Massen gut verteilbar.

## Beispiel 1

a) In einem Gemisch aus 55 g Schwefelsäure (96%) und 22 g Nitrosylschwefelsäure (40%) werden 14 g 1-Amino-anthrachinon in der Kälte gelöst und bei Raumtemperatur 3 Std. verrührt. Anschließend verdünnt man mit 200 g Wasser und zerstört überschüssiges Nitrit mit Amido-sulfonsäure. Dann setzt man 11,3 g N-Ethyl-3-cyan-6-hydroxy-4-methyl-pyridon-(2) zu, erhöht innerhalb von 2 Std. die Temperatur auf 90°C und hält bei dieser Temperatur bis sich kein Diazoniumsalz mehr nachweisen läßt. Nach Absaugen und Neutralwaschen erhält man 23, 5 g (91% d. Th.) des gelben

Pigmentes der Formel

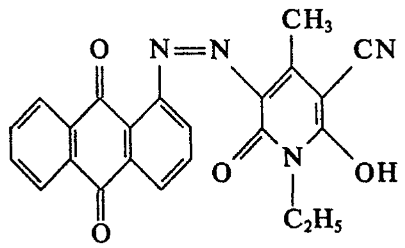

(XIV)

$C_{23}H_{16}N_4O_4$ (412.409)

| | | | |
|---|---|---|---|
| Ber.: | C 66,99 | H 3,91 | N 13,59 |
| Gef.: | C 67,2 | H 3,9 | N 13,6 |

b) 14 g 1-Aminoanthrachinon werden in 70 g Schwefelsäure (96%) kalt gelöst und in eine Lösung von 5 g Natriumnitrit in 250 g Eiswasser langsam eingetropft. Man rührt 2 Std. nach, saugt das Diazoniumsulfat ab und wäscht mit etwas Eiswasser nach. Der Niederschlag wird in 200 ml Methanol suspendiert, 20 ml Ameisensäure (85%) und 11,3 g N-Ethyl-3-cyan-6-hydroxy-4-methyl-pyridon-(2) zugesetzt und 3 Std. am Rückflußkühler gekocht. Man saugt heißt ab, wäscht mit Methanol nach und erhält nach dem Trocknen 22 g (85% d. Th.) des in Beispiel 1a genannten Gelbpigmentes.

c) In 300 ml Dimethylformamid werden 10 g Schwefelsäure (96%) und 14 g 1-Aminoanthrachinon bei Raumtemperatur gelöst. Man tropft eine Lösung von 7,5 g Amylnitrit in 20 ml DMF ein, rührt 3 Std. nach, setzt 11,3 g N-Ethyl-3-cyan-6-hydroxy-4-methyl-pyridon-(2) zu und rührt ca. 5 Std. bei Raumtemperatur, bis sich kein Diazoniumsalz mehr nachweisen läßt. Dann saugt man ab, wäscht mit Dimethylformamid und Methanol nach und erhält nach dem Trocknen 23 g (89%) des in Beispiel 1a genannten Gelbpigmentes.
Mit ähnlichen Ausbeuten und in gleicher Qualität erhält man das in Beispiel 1a genannte Gelbpigment, wenn man bei dem in Beispiel 1c genannten Verfahren anstelle von Schwefelsäure Essigsäure oder Chloressigsäure und anstelle von Dimethylformamid Toluol, 1.2-Dichlorbenzol oder Nitrobenzol verwendet.

d) 11 g wäßrige Ethylaminlösung (50%) werden unter Kühlung tropfenweise mit 12 g Cyanessigsäuremethylester versetzt und 2 Std. bei 5—10° C verrührt. Dann setzt man 16 g Acetessigsäureethylester und 10 g 50%ige Ethylaminlösung zu, rührt 4 Std. bei 80° C und stellt mit verd. Schwefelsäure auf pH 5. Bei ca. 80° C wird dann das Diazoniumsalz aus 28 g 1-Aminoanthrachinon eingetragen und bei dieser Temperatur gerührt, bis sich kein Diazoniumsalz mehr nachweisen läßt.
Anschließend wird heiß abgesaugt, neutralgewaschen und getrocknet. Man erhält 43 g (83% d. Th.) des in Beispiel 1a genannten Gelbpigmentes.

Nach den in den Beispielen 1a—1d genannten Verfahren erhält man unter Verwendung der in der Tabelle angegebenen Pyridone anstelle von N-Ethyl-3-cyan-6-hydroxy-4-methyl-pypridon-(2) Azopigmente mit den angegebenen Farbtönen

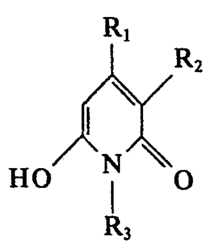

| Beispiel | $R_1$ | $R_2$ | $R_3$ | Farbton |
|---|---|---|---|---|
| 2 | $CH_3$ | CN | $CH_3$ | gelb |
| 3 | $CH_3$ | CN | n-Propyl | gelb |
| 4 | $CH_3$ | CN | n-Butyl | gelb |
| 5 | $CH_3$ | CN | i-Butyl | gelb |

Fortsetzung

| Beispiel | $R_1$ | $R_2$ | $R_3$ | Farbton |
|---|---|---|---|---|
| 6 | $CH_3$ | CN | t-Butyl | gelb |
| 7 | $CH_3$ | CN | n-Hexyl | gelb |
| 8 | $CH_3$ | CN | n-Dodecyl | gelb |
| 9 | $CH_3$ | CN | Cyclohexyl | gelb |
| 10 | $CH_3$ | CN | $CH_2CH_2OH$ | rotst.-gelb |
| 11 | $CH_3$ | CN | $CH_2CH_2OCH_3$ | rotst.-gelb |
| 12 | $CH_3$ | CN | $CH_2CH_2OCONHC_4H_9$ | rotst.-gelb |
| 13 | $CH_3$ | CN | $CH_2C_6H_5$ | rotst.-gelb |
| 14 | H | CN | $CH_3$ | gelb |
| 15 | H | CN | $C_2H_5$ | gelb |
| 16 | H | CN | n-Butyl | gelb |
| 17 | $CH_3$ | $CONH_2$ | $CH_3$ | rotst.-gelb |
| 18 | $CH_3$ | $CONH_2$ | $C_2H_5$ | rotst.-gelb |
| 19 | H | $CONH_2$ | $CH_3$ | gelb |
| 20 | H | $CONH_2$ | $C_2H_5$ | gelb |
| 21 | H | CN | $CH_3$ | gelb |
| 22 | $C_6H_5$ | CN | $C_2H_5$ | gelb |
| 23 | $C_6H_5$ | $CONH_2$ | $C_2H_5$ | gelb |
| 24 | $CH_3$ | 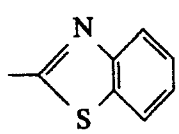 | $C_2H_5$ | orange |
| 25 | OH | $CONHCH_3$ | $CH_3$ | gelb |

Unter Verwendung der in der folgenden Tabelle aufgeführten Aminoanthrachinone und Pyridone anstelle von 1-Aminoanthrachinon und N-Ethyl-3-cyan-6-hydroxy-4-methyl-pyridon-(2) erhält man nach den in den Beispielen 1a—1d genannten Verfahren Azopigmente mit den angegebenen Farbtönen.

Tabelle 2

| Beispiel | Pyridon | Aminoanthrachinon | Farbton |
|---|---|---|---|
| 26 | 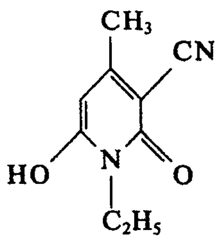 | 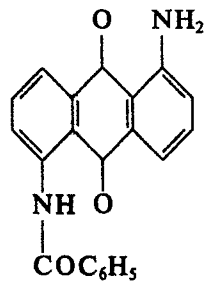 | rotst.-gelb |
| 27 | desgl. | 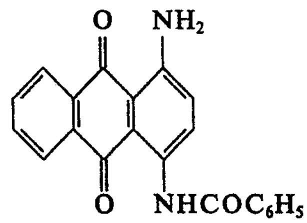 | marron |
| 28 | desgl. | 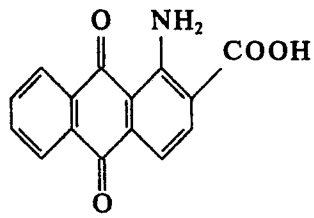 | orange |
| 29 | desgl. | 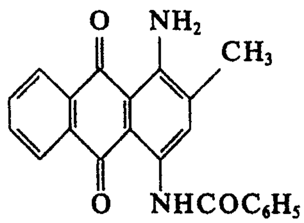 | marron |
| 30 | desgl. | 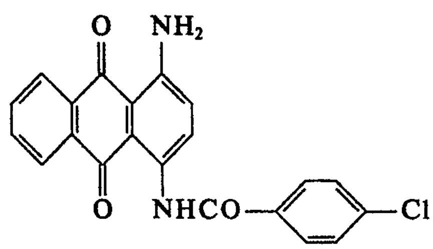 | braun |
| 31 | desgl. | 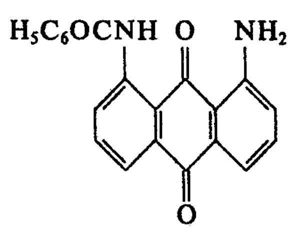 | orange |
| 32 | desgl. | 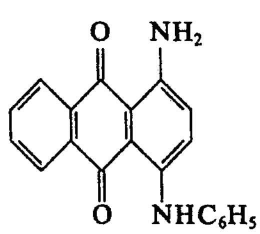 | violett |

Fortsetzung

| Beispiel | Pyridon | Aminoanthrachinon | Farbton |
| --- | --- | --- | --- |
| 33 | 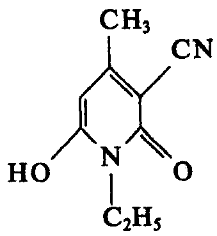 | 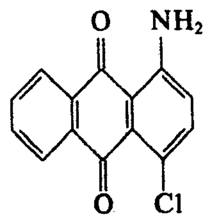 | gelb |
| 34 | desgl. | 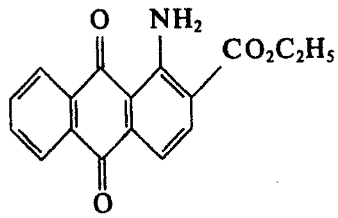 | orange |
| 35 | desgl. | 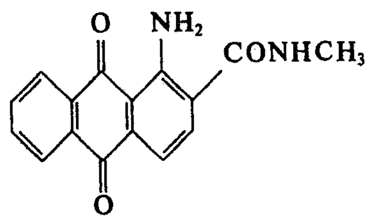 | orange |
| 36 | desgl. | 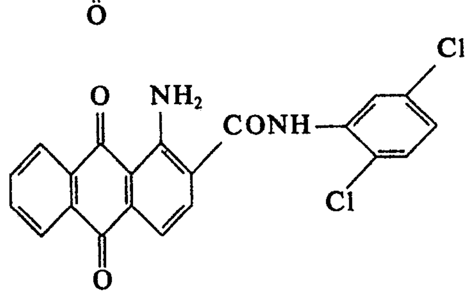 | orange |
| 37 | desgl. | 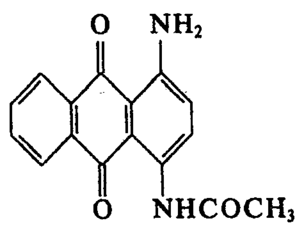 | marron |
| 38 | desgl. | 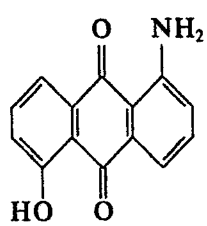 | gelb |
| 39 | desgl. | 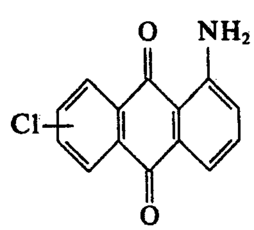 | gelb |

Fortsetzung

| Beispiel | Pyridon | Aminoanthrachinon | Farbton |
| --- | --- | --- | --- |
| 40 | 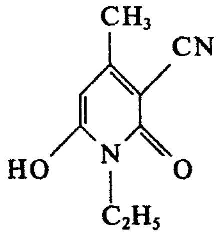 | 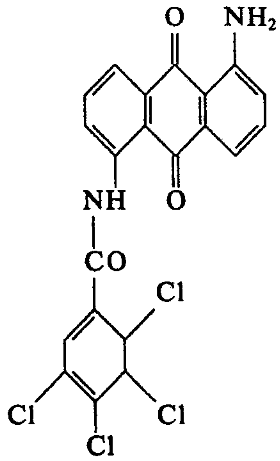 | rotst.-gelb |
| 41 | desgl. | 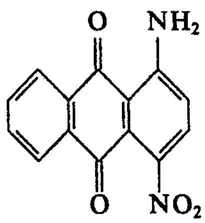 | gelb |
| 42 | desgl. | 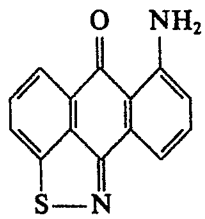 | gelb |
| 43 | desgl. | 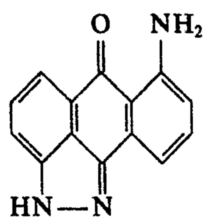 | gelb |
| 44 | 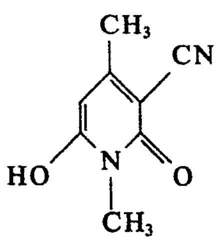 | 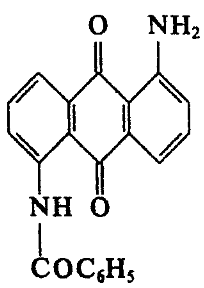 | rotst.-gelb |
| 45 | 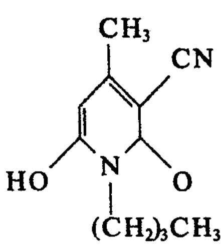 | 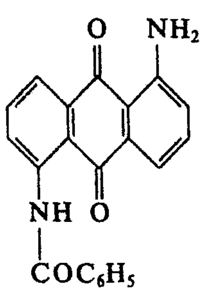 | rotst.-gelb |

Fortsetzung

| Beispiel | Pyridon | Aminoanthrachinon | Farbton |
|---|---|---|---|
| 46 | 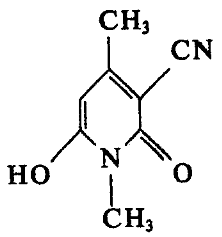 | 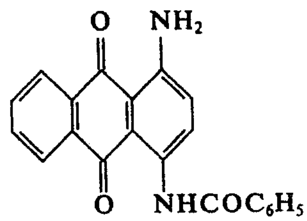 | marron |
| 47 | 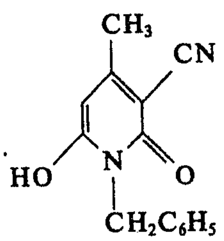 | 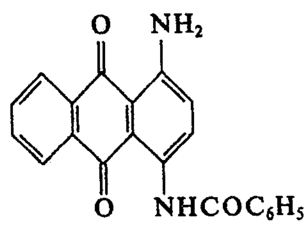 | marron |
| 48 | 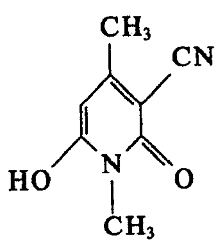 | 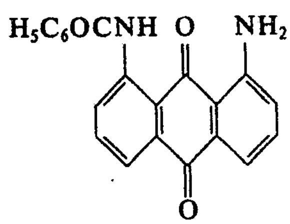 | orange |
| 49 | desgl. | 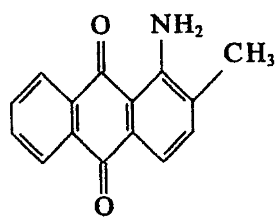 | orange |
| 50 | 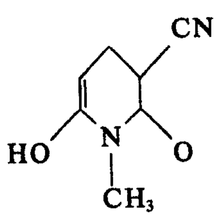 | 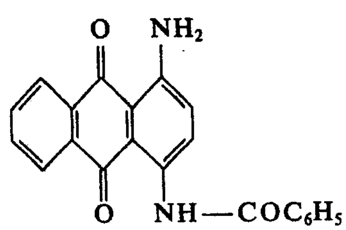 | braun |
| 51 | 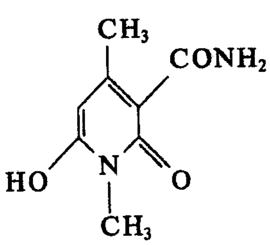 | 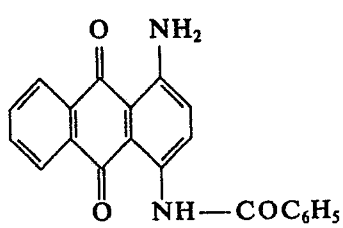 | braun |
| 52 | 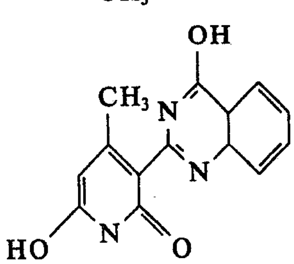 | 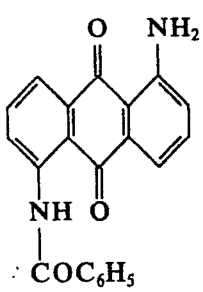 | rotst.-gelb |

Beispiel 53

a) 8 g des nach Beispiel 1a erhaltenen feinverteilten Pigmentes werden mit einem Einbrennlack aus 25 g Kokosölalkydharz (40% Kokosöl), 10 g Melaminharz, 50 g Toluol und 7 g Glykolmonomethylether auf einer automatischen Hoover-Müller-Anreibmaschine angerieben. Man trägt die Mischung auf die zu lackierende Unterlage auf, härtet den Lack durch Einbrennen bei 130°C und erhält gelbe Lackierungen sehr guter Überlackierechtheit und hervorragender Licht- und Wetterechtheit. Pigmentierte Einbrennlacke gleicher Echtheiten erhält man, wenn man 15—25 g des angegebenen Alkydharzes oder eines Alkydharzes auf Basis von Baumwollsaatöl, Ricinenöl, Ricinusöl oder synthetischen Fettsäuren verwendet und statt der angegebenen Melaminharzmenge 10—15 g des erwähnten Melaminharzes oder eines Kondensationsproduktes von Formaldehyd mit Harnstoff oder mit Benzoguanamin einsetzt.

b) Reibt man statt der angegebenen Pigmentmenge 1—10 g einer Mischung von Titandioxid (Rutiltyp) mit dem in Beispiel 53a angegebenen Pigment im Verhältnis 0,5—50 : 1 in den im Beispiel 53a angegebenen Lack ein, erhält man bei gleicher Weiterverarbeitung Lackierungen gleicher Echtheiten und mit steigendem Titandioxidgehalt nach weiß verschobenen, gelben Farbton.

Beispiel 54

In 100 g eines Nitrocelluloselacks, der aus 44 g Collodiumwolle (niedrigviskos, 35%ig, butanolfeucht), 5 g Dibutylphthalat, 40 g Ethylacetat, 20 g Toluol, 4 g n-Butanol und 10 g Glykolmonomethylether besteht, werden 6 g feinverteiltes Pigment gemäß Beispiel 1a eingerieben. Nach Verstreichen und Trocknen erhält man gelbe Lackierungen hervorragender Licht- und Überlackierechtheit. Zu gleichen Ergebnissen kommt man bei Verwendung von Nitrolacken mit 10—15 g Nitrocellulosegehalt, 5—10 g Weichmachergehalt und 70—85 g Lösungsmittelgemisch unter bevorzugter Verwendung von aliphatischen Estern wie Ethylacetat, Butylacetat und Aromaten wie Toluol und Xylol und kleineren Anteilen aliphatischer Ether wie Glykolether und Alkohole wie Butanol. Unter Weichmachern können z. B. verstanden werden: Phthalsäureester wie Dioctylphthalat, Dibutylphthalat, Ester der Phosphorsäure, Ricinusöl allein oder in Kombination mit ölmodifizierten Alkydharzen.

Lackierungen mit ähnlichen Echtheitseigenschaften erhält man bei Verwendung von anderen physikalisch trocknenden Spritz-, Zapon- und Nitrolacken, von lufttrocknenden Öl-, Kunstharz- und Nitrokombinationslacken, ofen- und lufttrocknenden Epoxidharzlacken, gegebenenfalls in Kombination mit Harnstoff-, Melamin-, Alkyd- oder Phenolharzen.

Beispiel 55

5 g in feine Verteilung gebrachtes Pigment gemäß Beispiel 1a werden in 100 g eines paraffinfrei trocknenden ungesättigten Polyesterharzes in einer Porzellankugelmühle angerieben. Mit der Anreibung werden 10 g Styrol, 59% Melamin-Formaldehyd-Harz und 1 g einer Paste aus 40 g Cyclohexanonperoxid und 60 g Dibutylphthalat gut verrührt und schließlich 4 g Trocknerlösung (10%iges Kobaltnaphthenat in Testbenzin) und 1 g Siliconöllösung (1%ig in Xylol) beigemischt. Man trägt die Mischung auf grundiertes Holz auf und erhält eine hochglänzende wasserfeste und wetterechte gelbe Lackierung von hervorragender Lichtechtheit.

Verwendet man statt des Reaktionslackes auf Basis ungesättigter Polyesterharze aminhärtende Epoxidharzlacke mit Dipropylendiamin als Aminokomponente, erhält man gelbe Lackierungen hervorragender Wetter- und Ausblühechtheit.

Beispiel 56

100 g einer 65%igen Lösung eines aliphatischen Polyesters mit ca. 8% freien Hydroxylgruppen in Glykolmonoethyletheracetat werden mit 5 g des nach Beispiel 1a erhaltenen Pigmentes angerieben und sodann mit 44 g einer 67%igen Lösung des Umsetzungsproduktes von 1 Mol Trimethylolpropan mit 3 Mol Toluylen-diisocyanat gut vermischt. Ohne Beeinträchtigung der Topfzeit ergeben sich nach Auftragen des Gemisches und Reaktion der Komponenten hochglänzende gelbe Polyurethanlackierungen hervorragender Ausblüh-, Licht- und Wetterechtheit.

Pigmentierungen ähnlicher Echtheit erhält man bei Anwendung anderer Zweikomponentenlacke auf Basis von aromatischen oder aliphatischen Isocyanaten und hydroxylgruppenhaltigen Polyethern oder Polyestern, sowie mit feuchtigkeitstrocknenden, Polyharnstofflackierungen ergebenden Polyisocyanatlacken.

Beispiel 57

5 g eines Feinteiges, erhalten durch Kneten von 50 g des nach Beispiel 1a erhaltenen Pigmentes mit 15 g eines Arylpolyglykolether-Emulgators und 35 g Wasser werden mit 10 g Schwerspat als Füllstoff, 10 g Titandioxid (Rutiltyp) als Weißpigment und 40 g einer wäßrigen Dispersionsfarbe, enthaltend ca. 50% Polyvinylacetat, gemischt. Man verstreicht die Farbe und erhält nach Trocknen gelbe Anstriche sehr guter Kalk- und Zementechtheit sowie hervorragender Wetter- und Lichtechtheit.

Der durch Kneten erhaltene Feinteig eignet sich gleichermaßen zum Pigmentieren klarer Polyvinylacetat-Dispersionsfarben, für Dispersionsfarben, die Mischpolymerisate aus Styrol und Maleinsäuren als Bindemittel enthalten, sowie Dispersionsfarben auf Basis von Polyvinylpropionat, Polymethacrylat oder Butadienstyrol.

Beispiel 58

10 g des in Beispiel 57 beschriebenen Pigment-Teiges werden mit einer Mischung aus 5 g Kreide und 5 g 20%iger Leimlösung vermischt. Man erhält eine gelbe Tapetenstreichfarbe, mit der man Überzüge hervorragender Lichtechtheit erzielt. Zur Herstellung des Pigment-Teiges können auch andere nicht ionogene Emulgatoren wie die Umsetzungsprodukte von Nonylphenol mit Ethylenoxid oder ionogene Netzmittel, wie die Natriumsalze von Alkylarylsulfonsäuren, z. B. der Dinaphthylmethandisulfonsäure, Natriumsalze von substituierten Sulfofettsäureestern und Natriumsalze von Paraffinsulfonsäuren in Kombination mit Alkylpolyglykolethern verwendet werden.

Beispiel 59

Eine Mischung aus 65 g Polyvinylchlorid, 35 g Diisooctylphthalat, 2 g Dibutylzinnmercaptid, 0,5 g Titandioxid und 0,5 g des Pigmentes von Beispiel 1a wird auf einem Mischwalzwerk bei 165°C eingefärbt. Man erhält eine intensiv gelb gefärbte Masse, die zur Herstellung von Folien oder Formkörpern dienen kann. Die Färbung zeichnet sich durch hervorragende Licht- und sehr gute Weichmacherechtheit aus.

Beispiel 60

0,2 g Pigment nach Beispiel 1a werden mit 100 g Polyethylen-, Polypropylen- oder Polystyrolgranulat gemischt. Die Mischung kann entweder bei 220°C bis 280°C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die gelben Formlinge besitzen sehr gute Licht- und Migrationsechtheit. In ähnlicher Weise können bei 280—300°C, gegebenenfalls unter Stickstoffatmosphäre, synergistische Polyamide aus Caprolactam oder Adipinsäure und Hexamethylendiamin oder die Kondensate aus Terephthalsäure und Ethylenglykol gefärbt werden.

Beispiel 61

1 g Pigment nach Beispiel 1a, 10 g Titandioxid (Rutiltyp) und 100 g eines in Pulverform vorliegenden Mischpolymerisates auf Basis von Acrylnitril-Butadien-Styrol werden gemischt und auf einem Walzwerk bei 140—180°C eingefärbt. Man erhält ein gelb gelb gefärbtes Fell, das granuliert und in einer Spritzgußmaschine bei 200—250°C verspritzt wird. Man erhält gelbe Formlinge guter Licht- und Migrationsechtheit sowie guter Hitzebeständigkeit.

Auf ähnliche Weise, jedoch bei Temperaturen von 180—220°C und ohne Zusatz von Titandioxid werden Kunststoffe auf Basis von Celluloseacetat, Cellulosebutyrat und deren Gemisch mit ähnlichen Echtheiten gefärbt.

Beispiel 62

0,2 g Pigment nach Beispiel 1a werden in feinverteilter Form mit 100 g eines Kunststoffes auf Polycarbonat-Basis in einem Extruder oder in einer Knetschnecke bei 250—280°C gemischt und zu Granulat verarbeitet. Man erhält ein gelbes, transparentes Granulat hervorragender Lichtechtheit und Hitzebeständigkeit.

### Beispiel 63

90 g eines schwach verzweigten Polypropylenglykols mit einem Molekulargewicht von 2500 und einer Hydroxylzahl von 56, 0,25 g Endoethylenpiperazin, 0,3 g Zinn-(II)-octoat, 1,0 g eines Polyethersiloxans, 3,5 g Wasser, 12,0 g einer Anreibung von 10 g Pigment nach Beispiel 1a in 50 g des angegebenen Polypropylenglykols werden gut miteinander gemischt und anschließend mit 45 g Toluylendiisocyanat (80% 2,4- und 20% 2,6-Isomeres) innig gemischt und in eine Form gegossen. Die Mischung trübt sich nach 6 Sekunden und die Schaumstoffbildung erfolgt. Nach 70 Sekunden hat sich ein intensiv gelb gefärbter, weicher Polyurethanschaumstoff gebildet, dessen Pigmentierung hervorragende Lichtechtheit aufweist.

### Beispiel 64

90 g eines schwach verzweigten Polyesters aus Adipinsäure, Diethylenglykol und Trimethylolpropan mit einem Molekulargewicht von 2000 und einer Hydroxylzahl von 60 werden mit folgenden Komponenten vermischt: 1,2 g Dimethylbenzylamin, 2,5 g Natrium-Ricinusölsulfat, 2,0 g eines oxethylierten, benzylierten Oxidinphenyls, 1,75 g Wasser, 12 g einer Paste, hergestellt durch Anreiben von 10 g des Pigmentes nach Beispiel 1a in 50 g des oben angegebenen Polyesters. Nach der Mischung werden unter Rühren 40 g Toluylendiisocyanat (65% 2,4- und 35% 2,6-Isomeres) eingerührt und die Mischung in eine Form gegossen und verschäumt. Nach 60 Sekunden hat sich ein gelb gefärbter, weicher Polyurethanschaumstoff gebildet, dessen Einfärbung sich durch sehr gute Lichtechtheiten auszeichnet.

### Beispiel 65

Mit einer Druckfarbe, hergestellt durch Anreiben von 35 g Pigment nach Beispiel 1a und 65 g Leinöl und Zugabe von 1 g Siccativ (Co-Napthenat, 50%ig in Testbenzin) werden gelbe Offset-Drucke hoher Brillanz und Farbstärke und sehr guter Licht- und Lackierechtheit erhalten. Verwendung dieser Druckfarbe in Buch-, Licht-, Stein- oder Stahlstichdruck führt zu gelben Drucken ähnlicher Echtheiten. Verwendet man das Pigment zur Färbung von Blechdruck- oder niedrigviskosen Tiefdruckfarben oder Drucktinten, erhält man gelbe Drucke ähnlicher Echtheiten.

### Beispiel 66

Aus 10 g des in Beispiel 57 angegebenen Pigment-Feinteiges, 100 g Traganth 3%ig, 100 g einer wäßrigen 50%igen Eialbuminlösung und 25 g eines nichtionogenen Netzmittels wird eine Druckpaste bereitet. Man bedruckt ein Textilfasergewebe, dämpft bei 100°C und erhält einen gelben Druck, der sich durch vorzügliche Echtheiten, insbesondere Lichtechtheiten auszeichnet. Im Druckansatz können anstelle des Traganths und Eialbumins weitere, für das Fixieren auf der Faser verwendbare Bindemittel, beispielsweise solche auf Kunstharzbasis, Britishgum oder Celluloseglykolat verwendet werden.

### Beispiel 67

Eine Mischung aus 100 g Crêpe hell, 2,6 g Schwefel, 1 g Stearinsäure, 1 g Mercaptobenzthiazol, 0,2 g Hexamethylentetramin, 5 g Zinkoxid, 60 g Kreide und 2 g Titandioxid (Anatastyp) wird auf einem Mischwalzwerk bei 50°C und mit 2 g des nach Beispiel 1a erhaltenen Pigmentes eingefärbt und dann 12 Minuten bei 140°C vulkanisiert. Man erhält ein gelb gefärbtes Vulkanisat sehr guter Lichtechtheit.

### Beispiel 68

100 g einer 20%igen wäßrigen Paste des Pigments nach Beispiel 1a beispielsweise hergestellt durch Auflösen des Farbstoffes in 96%iger Schwefelsäure, Austragen auf Eis, Filtrieren und Neutralwaschen mit Wasser, werden 22,5 l einer wäßrigen, ungefähr 9%igen Viskoselösung im Rührwerk zugesetzt. Die gefärbte Masse wird 15 Minuten gerührt, anschließend entlüftet und einem Spinn- und Entschwefelungsprozeß unterworfen. Man erhält gelbe Fäden oder Folien mit sehr guter Lichtechtheit.

### Beispiel 69

10 kg einer Papiermasse, enthaltend auf 100 g 4 g Cellulose, werden im Holländer während etwa 2 Stunden behandelt. Während dieser Zeit gibt man je viertelstündigen Abständen 4 g Harzleim, dann

30 g einer etwa 15%igen Pigmentdispersion, erhalten durch Mahlen von 4,8 g des nach Beispiel 1a erhaltenen Pigmentes mit 4,8 g Dinaphthalinmethandisulfonsäure und 22 g Wasser in der Kugelmühle, sodann 5 g Aluminiumsulfat zu.

Nach Fertigstellung auf der Papiermaschine erhält man ein gelb gefärbtes Papier von hervorragender Lichtechtheit.

Beispiel 70

Das nach Beispiel 69 hergestellte, gelb pigmentierte Papier wird mit der 55%igen Lösung eines Harnstoff-Formaldehyd-Harzes in n-Butanol getränkt und bei 140°C eingebrannt. Man erhält ein gelbes Laminatpapier von sehr guter Migrations- und hervorragender Lichtechtheit.

Ein Laminatpapier gleicher Echtheit erhält man durch Laminieren eines Papieres, das im Tiefdruckverfahren mit einer Druckfarbe bedruckt wurde, die den in Beispiel 57 angegebenen, gelben Pigmentfeinteig und wasserlösliche bzw. verseifbare Bindemittel enthält.

Beispiel 71

20 g des gemäß Beispiel 1a erhaltenen Pigmentes werden in 50 g Dimethylformamid unter Verwendung eines Dispergierhilfsmittels, bestehend aus 50 g einer 10%igen Lösung von Polyacrylnitril in Dimethylformamid, in einer Perlmühle fein dispergiert. Das so erhaltene Pigmentkonzentrat wird in bekannter Weise zu Spinnlösung von Polyacrylnitril gegeben, homogenisiert und dann zu Filamenten nach bekannten Trocken- oder Naß-Spinnverfahren versponnen.

Man erhält gelb gefärbte Filamente, deren Färbung sich durch sehr gute Reib-, Wasch-, Migrations-, Hitze-, Licht- und Wetterechtheiten auszeichnet.

**Patentansprüche**

1. Anthrachinonazo-Verbindungen, die in einer ihrer tautomeren Strukturen der Formel

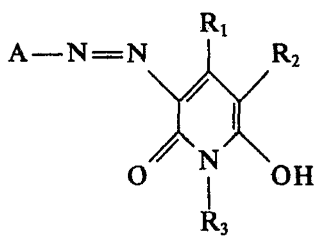

(I)

entsprechen, worin

A einen von Sulfonsäuregruppen freien, gegebenenfalls weitersubstituierten α-Anthrachinonrest oder einen von Sulfonsäuregruppen freien, gegebenenfalls weitersubstituierten heterocyclischen Anthrachinonrest, der vorzugsweise aus höchstens 5 kondensierten Ringen besteht,

$R_1$ Wasserstoff, Alkyl, Aryl oder Hydroxy,

$R_2$ Wasserstoff, Halogen, Nitro, Cyan, gegebenenfalls substituiertes Carbamoyl, gegebenenfalls substituiertes Sulfamoyl, Alkylcarbonyl, Alkoxycarbonyl, Alkansulfonyl, gegebenenfalls substituiertes Benzlsulfonyl oder einen heteroaromatischen Rest und, wobei $R_1$ und $R_2$ nicht gleichzeitig Wasserstoff bezeichnen können

$R_3$ einen gegebenenfalls durch Hydroxy, $C_1-C_4$-Alkoxy, Phenyl, Carbamoyl oder $C_1-C_4$-Alkylcarbamoyl substituierten $C_1-C_6$-Alkylrest, einen gegebenenfalls substituierten Cycloalkylrest, einen gegebenenfalls substituierten Aralkylrest oder einen gegebenenfalls substituierten Arylrest bezeichnen.

2. Anthrachinonazo-Verbindungen gemäß Anspruch 1, bei denen A einen gegebenenfalls substituierten α-Anthrachinonrest oder einen Anthrapyridon-, Anthrapyrimidin-, Pyrazolanthron-, Phthaloylacridon-, Phthaloylbenzimidazol- oder Isothiazolanthron-Rest bezeichnet, wobei die genannten heterocyclischen Reste durch Phenyl, Amino, Halogen, insbesondere Chlor oder Brom, oder $C_1-C_4$-Alkyl, insbesondere Methyl, substituiert sein können, bezeichnet.

3. Anthrachinonazo-Verbindungen gemäß den Ansprüchen 1 und 2, bei denen

$R_1$ Wasserstoff, $C_1-C_4$-Alkyl, insbesondere Methyl oder Hydroxy,

$R_2$ Wasserstoff, Chlor, Brom, Fluor, Nitro, Cyan, ($C_1-C_4$-Alkyl)-carbonyl, ($C_1-C_4$-Alkoxy)-carbonyl,

$C_1-C_4$-Alkansulfonyl oder gegebenenfalls durch $C_1-C_4$-Alkyl, $C_1-C_4$-Alkoxy, Fluor, Chlor, Brom, Nitro oder Carbamoxyl substituiertes Benzolsulfonyl oder einen heterocyclischen Rest der Formeln

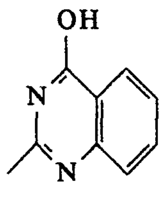

(II)

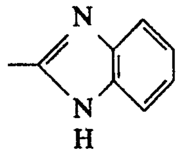

(III)

oder

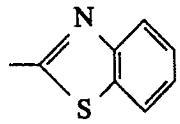

(IV)

oder einen Rest der Formel

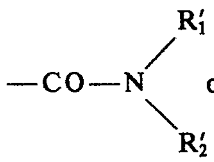

oder

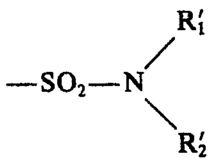

wobei

$R_1'$, $R_2$ für Wasserstoff, $C_1-C_4$-Alkyl, Phenyl und Benzyl stehen und die aromatischen Reste durch $C_1-C_4$-Alkyl, $C_1-C_4$-Alkoxy, Fluor, Chlor, Brom, Nitro oder Carbamoyl substituiert sein können, wobei jedoch $R_1$, $R_2$ nicht gleichzeitig für Wasserstoff stehen können und

$R_3$ einen gegebenenfalls durch Hydroxy, $C_1-C_4$-Alkoxy, Phenyl, Carbamoyl oder $C_1-C_4$-Alkylcarbamoyl substituierten $C_1-C_6$-Alkylrest, einen gegebenenfalls substituierten $C_3-C_7$-Cycloalkylrest, einen gegebenenfalls substituierten Phenylrest oder einen gegebenenfalls substituierten Benzylrest bezeichnen.

4. Anthrachinonazo-Verbindungen gemäß Anspruch 1 der Formel

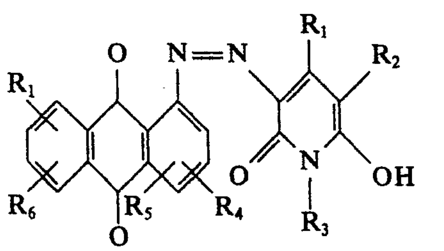

(VII)

in der

$R_1$, $R_2$, $R_3$ die in Anspruch 1 genannten Bedeutungen haben

$R_4$ Wasserstoff, Fluor, Chlor oder Brom, Nitro, $C_1-C_4$-Alkyl, $C_1-C_4$-Alkoxy, $C_1-C_4$-Alkylamino, Benzylamino, Cyclohexylamino, $C_1-C_4$-Alkyl-mercapto, gegebenenfalls durch $C_1-C_4$-Alkyl, $C_1-C_4$-Alkoxy, Fluor, Chlor, Brom oder Nitro substituiertes Phenylmercapto, $C_1-C_4$-Alkyl)-carbonyl, ($C_1-C_4$-Alkoxy)-carbonyl, gegebenenfalls durch $C_1-C_4$-Alkyl, $C_1-C_4$-Alkoxy, Chlor oder Nitro substituiertes Phenylamino, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom, Nitro oder Carbonamido substituiert sein kann, Carboxy, Hydroxy, ($C_1-C_4$-Alkyl)-carbonylamino, gegebenenfalls durch $C_1-C_4$-Alkyl, $C_1-C_4$-Alkoxy, Fluor, Chlor, Brom oder Nitro substituiertes Benzoylamino oder gegebenenfalls durch $C_1-C_4$-Alkyl, $C_1-C_4$-Alkoxy, Fluor, Chlor, Brom oder Nitro substitutiertes Benzolsulfonylamino,

$R_5$ Wasserstoff, $C_1-C_4$-Alkyl insbesondere Methyl, Fluor, Chlor oder Brom oder Hydroxy,

$R_6$ Wasserstoff, Fluor, Chlor oder Brom, Nitro, $C_1-C_4$-Alkyl, $C_1-C_4$-Alkoxy, $C_1-C_4$-Alkylamino, $C_1-C_4$-Alkylmercapto, gegebenenfalls durch $C_1-C_4$-Alkyl, $C_1-C_4$-Alkoxy, Fluor, Chlor, Brom oder Nitro substituiertes Phenylmercapto, ($C_1-C_4$-Alkoxy)-carbonyl, ($C_1-C_4$-Alkyl)-carbonyl, Benzylamino, Cyclohexylamino, gegebenenfalls durch $C_1-C_4$-Alkyl, $C_1-C_4$-Alkoxy, Chlor, Brom oder Nitro substituiertes Phenylamino, Carboxy, Hydroxy, gegebenenfalls durch $C_1-C_4$-Alkyl, Benzyl oder Phenyl mono- oder disubstituiertes Carbamoyl, wobei Phenyl durch $C_1-C_4$-Alkyl, $C_1-C_4$-Alkoxy, Fluor, Chlor, Brom oder Nitro substituiert sein kann, ($C_1-C_4$-Alkyl)-carbonylamino, gegebenenfalls durch $C_1-C_4$-Alkyl, $C_1-C_4$-Alkoxy, Fluor, Chlor, Brom oder Nitro substituiertes Benzoylamino, $C_1-C_4$-Alkansulfonylamino oder gegebenenfalls durch $C_1-C_4$-Alkyl, $C_1-C_4$-Alkoxy, Fluor,

Chlor, Brom oder Nitro substituiertes Benzolsulfonylamino und
$R_7$ Wasserstoff, Fluor, Chlor oder Brom oder Hydroxy bedeuten.

5. Anthrachinonazo-Verbindungen gemäß Anspruch 1 der Formel

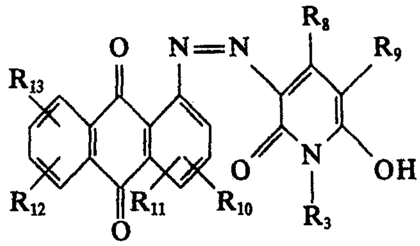

(VIII)

worin

$R_3$ die oben genannte Bedeutung hat und
$R_8$ Wasserstoff, Methyl oder Hydroxy,
$R_9$ Wasserstoff, Cyan, gegebenenfalls durch $C_1-C_4$-Alkyl mono- oder disubstituiertes Carbamoyl oder Chlor, wobei jedoch $R_8$, $R_9$ nicht gleichzeitig für Wasserstoff stehen können,
$R_{10}$ Wasserstoff, Methyl, Chlor, Brom, Nitro, Acetyl, ($C_1-C_4$-Alkoxy) -carbonyl, gegebenenfalls durch $C_1-C_4$-Alkyl oder Phenyl substituiertes Carbamoyl, wobei Phenyl durch $C_1-C_4$-Alkyl, $C_1-C_4$-Alkoxy, Chlor, Brom oder Nitro substituiert sein kann, Carboxy, ($C_1-C_4$-Alkyl)-carbonylamino oder gegebenenfalls durch $C_1-C_4$-Alkyl, $C_1-C_4$-Alkoxy, Chlor, Brom oder Nitro substituiertes Benzoylamino,
$R_{11}$ Wasserstoff, Methyl oder Hydroxy
$R_{12}$ Wasserstoff, Chlor, Brom, Nitro, Hydroxy, ($C_1-C_4$-Alkyl-carbonyl)-amino, gegebenenfalls durch $C_1-C_4$-Alkyl, $C_1-C_4$-Alkoxy, Chlor, Brom oder Nitro substituiertes Benzoylamino, Carboxy, $C_1-C_4$-Alkoxycarbonyl oder gegebenenfalls durch $C_1-C_4$-Alkyl oder Phenyl substituiertes Carbamoyl, wobei Phenyl durch $C_1-C_4$-Alkyl, $C_1-C_4$-Alkoxy, Chlor, Brom oder Nitro weitersubstituiert sein kann und
$R_{13}$ Wasserstoff, Chlor, Hydroxy oder Nitro bedeuten.

6. Anthrachinonazo-Verbindungen gemäß Anspruch 1 der Formel

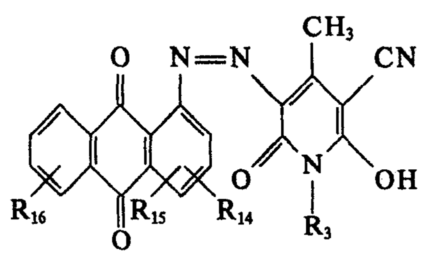

(IX)

worin

$R_3$ die oben genannte Bedeutung hat und
$R_{14}$ Wasserstoff, Hydroxy oder gegebenenfalls durch Chlor oder Nitro substituiertes Benzoylamino,
$R_{15}$ Wasserstoff oder Methyl und
$R_{16}$ Wasserstoff, Chlor oder gegebenenfalls durch Chlor oder Nitro substituiertes Benzoylamino bedeuten.

7. Anthrachinonazo-Verbindungen der Formel

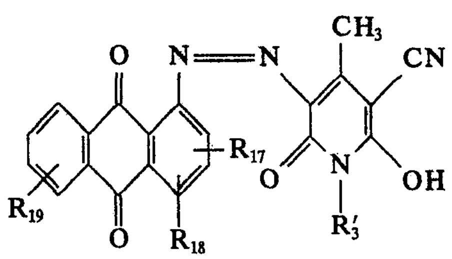

(XV)

worin

$R_3'$ $C_1-C_6$-Alkyl oder Benzyl,
$R_{17}$ Wasserstoff, Hydroxy oder gegebenenfalls durch Chlor oder Nitro substituiertes Benzoylamino,
$R_{18}$ Wasserstoff oder Methyl und
$R_{19}$ Wasserstoff, Chlor oder gegebenenfalls durch Chlor oder Nitro substituiertes Benzoylamino bedeuten.

8. Anthrachinonazo-Verbindungen der Formel

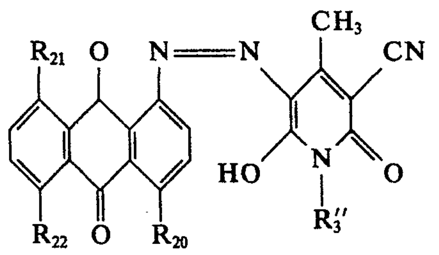

(XVI)

in der

$R_3''$ $C_1-C_4$-Alkyl und
$R_{20}$, $R_{21}$, $R_{22}$ Wasserstoff oder Benzoylamino, wobei höchstens einer der Reste $R_{20}$, $R_{21}$, $R_{22}$ für Benzoylamino steht, bedeuten.

9. Verfahren zur Herstellung von Anthrachinonazo-Verbindungen der Formel (I), dadurch gekennzeichnet, daß man Aminoanthrachinone der Formel

$$A-NH_2 \quad (V)$$

in der A die oben genannte Bedeutung hat, diazotiert und auf Kupplungskomponenten der Formel

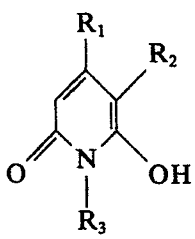

(VI)

in der $R_1$, $R_2$ und $R_3$ die oben angegebene Bedeutung haben, kuppelt.

10. Verfahren zum Pigmentieren organischer makromolekularer Stoffe, dadurch gekennzeichnet, daß man Anthrachinonazo-Verbindungen gemäß den Ansprüchen 1 bis 8 verwendet.

**Claims**

1. Anthraquinone-azo compounds which, in one of their tautomeric structures, correspond to the formula

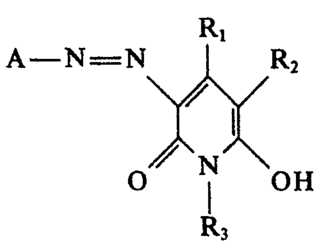

(I)

wherein

A designates an $\alpha$-anthraquinone radical which is free from sulphonic acid groups and is optionally further substituted, or a heterocyclic anthraquinone radical which is free from sulphonic acid

groups and is optionally further substituted and which preferably consists of at most 5 fused ring,

$R_1$ designates hydrogen, alkyl, aryl or hydroxyl,

$R_2$ designates hydrogen, halogen, nitro, cyano, optionally substituted carbamoyl, optionally substituted sulphamoyl, alkylcarbonyl, alkoxycarbonyl, alkanesulphonyl, optionally substituted benzenesulphonyl or a hetero-aromatic radical and, it not being possible for $R_1$ and $R_2$ to simultaneously designate hydrogen,

$R_3$ designates a $C_1-C_6$-alkyl radical which is optionally substituted by hydroxyl, $C_1-C_4$-alkoxy, phenyl, carbamoyl or $C_1-C_4$-alkylcarbamoyl, an optionally substituted cycloalkyl radical, an optionally substituted aralkyl radical or an optionally substituted aryl radical.

2. Anthraquinone-azo compounds according to claim 1, in which A designates an optionally substituted $\alpha$-anthraquinone radical or an anthrapyridone, anthrapyrimidine, pyrazolanthrone, phthaloylacridone, phthaloylbenzimidazole or isothiazolanthrone radical, it being possible for the heterocyclic radicals mentioned to be substituted by phenyl, amino, halogen, in particular chlorine or bromine, or $C_1-C_4$-alkyl, in particular methyl.

3. Anthraquinone-azo compounds according to claims 1 and 2, in which

$R_1$ designates hydrogen, $C_1-C_4$-alkyl, in particular methyl, or hydroxyl,

$R_2$ designates hydrogen, chlorine, bromine, fluorine, nitro, cyano, ($C_1-C_4$-alkyl)- carbonyl, ($C_1-C_4$-alkoxy)-carbonyl, $C_1-C_4$-alkanesulphonyl, or benzenesulphonyl which is optionally substituted by $C_1-C_4$-alkyl, $C_1-C_4$-alkoxy, fluorine, chlorine, bromine, nitro or carbamoyl, or a heterocyclic radical of the formula

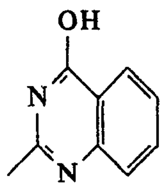

(II)

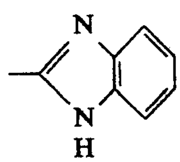

(III)

or

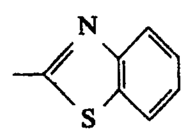

(IV)

or a radical of the formula

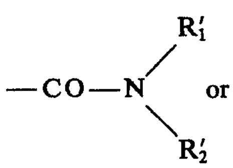

or

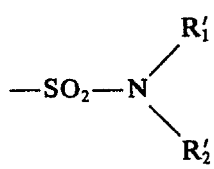

wherein

$R_1'$ and $R_2'$ represent hydrogen, $C_1-C_4$-alkyl, phenyl or benzyl, it being possible for the aromatic radicals to be substituted by $C_1-C_4$-alkyl, $C_1-C_4$-alkoxy, fluorine, chlorine, bromine, nitro or carbamoyl, is not however beeing possible for $R_1$ and $R_2$ to simultaneously represent hadrogen and

$R_3$ designates a $C_1-C_6$-alkyl radical which is optionally substituted by hydroxyl, $C_1-C_4$-alkoxy, phenyl, carbamoyl or $C_1-C_4$-alkylcarbamoyl, an optionally substituted $C_3-C_7$-cycyloalkyl radical, an optionally substituted phenyl radical or an optionally substituted benzyl radical.

4. Anthraquinone-azo compounds according to claim 1, of the formula

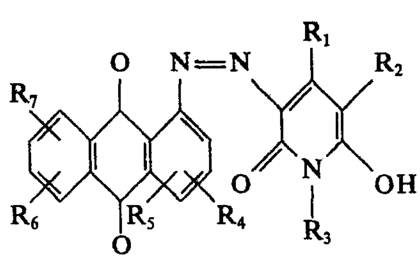

(VII)

in which

$R_1$, $R_2$ an $R_3$ have the meanings indicated in Claim 1,

$R_4$ denotes hydrogen, fluorine, chlorine, or bromine, nitro, $C_1$—$C_4$-alkyl, $C_1$—$C_4$-alkoxy, $C_1$—$C_4$-alkylamino, benzylamino, cyclohexylamino, $C_1$—$C_4$-alkylmercapto, phenylmercapto which is optionally substituted by $C_1$—$C_4$-alkyl, $C_1$-$C_4$-alkoxy, fluorine, chlorine, bromine or nitro, ($C_1$—$C_4$-alkyl)-carbonyl, ($C_1$—$C_4$-alkoxy)-carbonyl, phenylamino which is optionally substituted by $C_1$—$C_4$-alkyl, $C_1$—$C_4$-alkoxy, chlorine or nitro, carbamoyl which is optionally monosubstituted or disubstituted by $C_1$—$C_4$-alkyl, benzyl or phenyl, it being possible for the phenyl to be substituted by $C_1$—$C_4$-alkyl, $C_1$—$C_4$- alkoxy, fluorine, chlorine, bromine, nitro or carboxamido, carboxyl, hydroxyl, ($C_1$—$C_4$-alkyl)-carbonylamino, benzoylamino which is optionally substituted by $C_1$—$C_4$-alkyl, $C_1$—$C_4$-alkoxy, fluorine, chlorine, bromine or nitro, or benzene-sulphonylamino which is optionally substituted by $C_1$—$C_4$-alkyl, $C_1$—$C_4$-alkoxy, fluorine, chlorine, bromine or nitro,

$R_5$ denotes hydrogen, $C_1$—$C_4$-alkyl, in particular methyl, fluorine, chlorine or bromine, or hydroxyl,

$R_6$ denotes hydrogen, fluorine, chlorine or bromine, nitro, $C_1$—$C_4$-alkyl, $C_1$—$C_4$-alkoxy, $C_1$—$C_4$-alkylamino, $C_1$—$C_4$-alkylmercapto, phenylmercapto which is optionally substituted by $C_1$—$C_4$-alkyl, $C_1$—$C_4$-alkoxy, fluorine, chlorine, bromine or nitro, ($C_1$—$C_4$-alkoxy)-carbonyl, ($C_1$—$C_4$-alkyl)-carbonyl, benzylamino, cyclohexylamino, phenylamino which is optionally substituted by $C_1$—$C_4$-alkyl, $C_1$—$C_4$-alkoxy, chlorine, bromine or nitro, carboxyl, hydroxyl, carbamoyl which is optionally monosubstituted or disubstituted by $C_1$—$C_4$-alkyl, benzyl or phenyl, it being possible for phenyl to be substituted by $C_1$—$C_4$-alkyl, $C_1$—$C_4$-alkoxy, fluorine, chlorine, bromine or nitro, ($C_1$—$C_4$-alkyl)-carbonylamino, benzoylamino which is optionally substituted by $C_1$—$C_4$-alkyl, $C_1$—$C_4$-alkoxy, fluorine, chlorine, bromine or nitro, $C_1$—$C_4$-alkanesulphonylamino or benzenesulphonylamino which is optionally substituted by $C_1$—$C_4$-alkyl, $C_1$—$C_4$-alkoxy, fluorine, chlorine, bromine or nitro and

$R_7$ denotes hydrogen, fluorine, chlorine or bromine, or hydroxyl.

5. Anthraquinone-azo compounds according to claim 1, of the formula

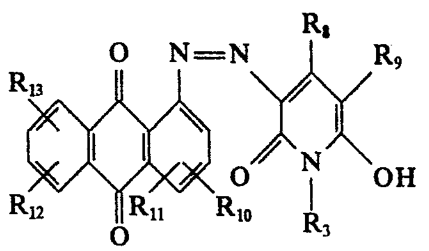

(VIII)

wherein

$R_3$ has the abovementioned meaning and

$R_8$ denotes hydrogen, methyl or hydroxyl,

$R_9$ denotes hydrogen, cyano, carbamoyl which is optionally monosubstituted or disubstituted by $C_1$—$C_4$-alkyl, or chlorine, it not however being possible for $R_8$ and $R_9$ to simultaneously denote hydrogen,

$R_{10}$ denotes hydrogen, methyl, chlorine, bromine, nitro, acetyl, ($C_1$—$C_4$-alkoxy)-carbonyl, carbamoyl which is optionally substituted by $C_1$—$C_4$-alkyl or phenyl, it being possible for phenyl to be substituted by $C_1$—$C_4$-alkyl, $C_1$—$C_4$-alkoxy, chlorine, bromine or nitro, carboxyl, ($C_1$—$C_4$-alkyl)-carbonylamino, or benzoylamino, which is optionally substituted by $C_1$—$C_4$-alkyl, $C_1$—$C_4$-alkoxy, chlorine, bromine or nitro,

$R_{11}$ denotes hydrogen, methyl or hydroxyl,

$R_{12}$ denotes hydrogen, chlorine bromine, nitro, hydroxyl, ($C_1$—$C_4$-alkyl-carbonyl)-amino, benzoylamino which is optionally substituted by $C_1$—$C_4$-alkyl, $C_1$—$C_4$-alkoxy, chlorine, bromine or nitro, carboxyl, $C_1$—$C_4$-alkoxycarbonyl, or carbamoyl which is optionally substituted by $C_1$—$C_4$-alkyl or phenyl, it being possible for phenyl to be further substituted by $C_1$—$C_4$-alkyl, $C_1$—$C_4$-alkoxy, chlorine, bromine or nitro, and

$R_{13}$ denotes hydrogen, chlorine, hydroxyl or nitro.

6. Anthraquinone-azo compounds according to claim 1, of the formula

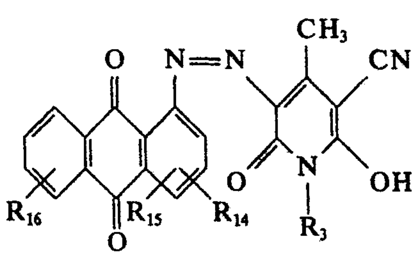

(IX)

wherein

$R_3$ has the abovementioned meaning,
$R_{14}$ denotes hydrogen, hydroxyl, or benzoylamino which is optionally substituted by chlorine or nitro,
$R_{15}$ denotes hydrogen or methyl and
$R_{16}$ denotes hydrogen, chlorine, or benzoylamino which is optionally substituted by chlorine or nitro.

7. Anthraquinone-azo compounds of the formula

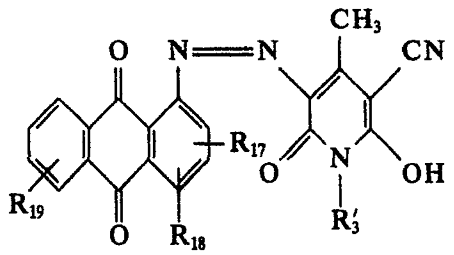

(XV)

wherein

$R_3'$ denotes $C_1-C_6$-alkyl or benzyl,

$R_{17}$ denotes hydrogen, hydroxyl, or benzoylamino which is optionally substituted by chlorine or nitro,
$R_{18}$ denotes hydrogen or methyl and
$R_{19}$ denotes hydrogen, chlorine, or benzoylamino which is optionally substituted by chlorine or nitro.

8. Anthraquinone-azo compounds of the formula

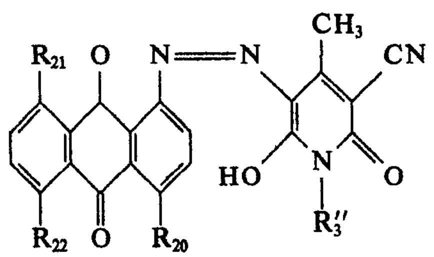

(XVI)

in which

$R_3''$denotes $C_1-C_4$-alkyl and
$R_{20}$, $R_{21}$, and $R_{22}$ denote hydrogen or benzoylamino,at most one of the radicals $R_{20}$, $R_{21}$ and $R_{22}$ representing benzoylamino.

9. Process for the preparation of anthraquinone-azo compounds of the formula (I), characterised in that aminoanthraquinones of the formula

$A-NH_2$ (V)

in which A has the abovementioned meaning, are diazotised and the diazotisation product ist coupled to coupling components of the formula

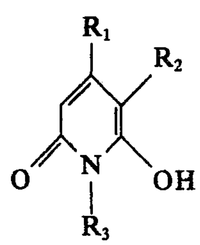

(VI)

in which $R_1$, $R_2$ and $R_3$ have the abovementioned meaning.

10. Process for pigmenting organic macromolecular substances, characterised in that anthraquinone-azo compounds according to claims 1 to 8 are used.

## Revendications

1. Composés azoïques anthraquinoniques qui, sous l'une de leurs formes tautomères, répondent à la formule

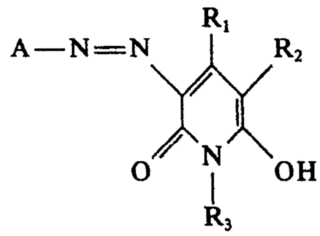

(I)

dans laquelle

A désigne un reste $\alpha$-anthraquinonique dépourvu de groupes acide sulfonique, portant éventuellement d'autres substituants ou un reste anthraquinonique hétérocyclique dépourvu de groupes acide sulfonique, portant éventuellement d'autres substituants, qui est formé de préférence d'un maximum de 5 noyaux condensés,
$R_1$ désigne l'hydrogène, un groupe alkyle, aryle ou hydroxy,
$R_2$ est l'hydrogène, un halogène, un groupe nitro, cyano, carbamoyle éventuellement substitué, sulfamoyle éventuellement substitué, alkylcarbonyle, alkoxycarbonyle, alcanesulfonyle, benzènesulfonyle éventuellement substitué ou un reste hétéro-aromatique, $R_1$ et $R_2$ ne pouvant pas représenter en même temps de l'hydrogène,
$R_3$ désigne un reste alkyle en $C_1$ à $C_6$ éventuellement substitué par un radical hydroxy, alkoxy en $C_1$ à $C_4$, phényle, carbamoyle ou (alkyle en $C_1$ à $C_4$) carbamoyle, un reste cycloalkyle éventuellement substitué, un reste aralkyle éventuellement substitué ou un reste aryle éventuellement substitué.

2. Composés azoïques anthraquinoniques suivant la revendication 1 dans lesquels A désigne un reste $\alpha$-anthraquinonique éventuellement substitué ou un reste d'anthrapyridone, d'anthrapyrimidine, de pyrazolanthrone, de phtaloylacridone, de phtaloylbenzimidazole ou d'isothiazolanthrone, les restes hétérocycliques mentionnés pouvant être substitués par un radical phényle, amino, halogéno, notamment chloro ou bromo, ou alkyle en $C_1$ à $C_4$, notamment méthyle.

3. Composés azoïques anthraquinoniques suivant les revendications 1 et 2, dans lesquels

$R_1$ désigne l'hydrogène, un groupe alkyle en $C_1$ à $C_4$, notamment méthyle ou hydroxy,
$R_2$ est l'hydrogène, le chlore, le brome, le fluor, le groupe nitro, cyano, (alkyle en $C_1$ à $C_4$) carbonyle, (alkoxy en $C_1$ à $C_4$) carbonyle, (alcane en $C_1$ à $C_4$) sulfonyle ou un reste benzènesulfonyle éventuellement substitué par un radical alkyle en $C_1$ à $C_4$, alkoxy en $C_1$ à $C_4$, fluoro, chloro, bromo, nitro ou carbamoxyle ou un reste hétérocyclique de formules

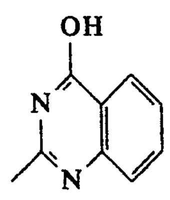

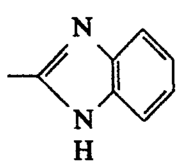

ou

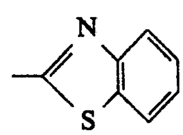

(II) (III) (IV)

ou un reste de formule

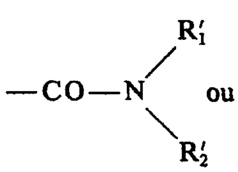

ou

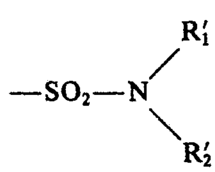

formules dans lesquelles
$R'_1$, $R'_2$ désignent l'hydrogène, un groupe alkyle en $C_1$ à $C_4$, phényle et benzyle et les restes aromatiques peuvent être substitués par un radical alkyle en $C_1$ à $C_4$, alkoxy en $C_1$ à $C_4$, fluoro, chloro, bromo, nitro ou carbamoyle, mais $R_1$, $R_2$ ne pouvant pas représenter en même temps de l'hydrogène et

$R_3$ désigne un reste alkyle en $C_1$ à $C_6$ éventuellement substitué par un radical hydroxy, alkoxy en $C_1$ à $C_4$, phényle, carbamoyle ou (alkyle en $C_1$ à $C_4$) carbamoyle, un reste cycloalkyle en $C_3$ à $C_7$ éventuellement substitué, un reste phényle éventuellement substitué ou un reste benzyle éventuellement substitué.

4. Composés azoïques anthraquinoniques suivant la revendication 1, de formule

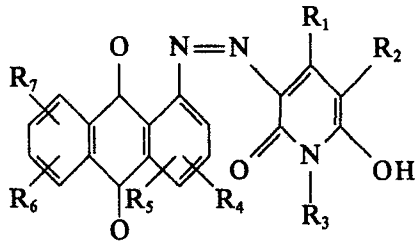

(VII)

dans laquelle

$R_1$, $R_2$, $R_3$
ont les définitions mentionnées dans la revendication 1,

$R_4$ désigne l'hydrogène, le fluor, le chlore ou le brome, un groupe nitro, alkyle en $C_1$ à $C_4$, alkoxy en $C_1$ à $C_4$, alkylamino en $C_1$ à $C_4$, benzylamino, cyclohexylamino, alkylmercapto en $C_1$ à $C_4$, un reste phénylmercapto éventuellement substitué par un radical alkyle en $C_1$ à $C_4$, alkoxy en $C_1$ à $C_4$, fluoro, chloro, bromo ou nitro, un reste (alkyle en $C_1$ à $C_4$) carbonyle, (alkoxy en $C_1$ à $C_4$)-carbonyle, un reste phénylamino éventuellement substitué par un radical alkyle en $C_1$ à $C_4$, alkoxy en $C_1$ à $C_4$, chloro ou nitro, un reste carbamoyle éventuellement monosubstitué ou disubstitué par un radical alkyle en $C_1$ à $C_4$, benzyle ou phényle, le radical phényle pouvant être substitué par un radical alkyle en $C_1$ à $C_4$, alkoxy en $C_1$ à $C_4$, fluoro, chloro, bromo, nitro ou carboxamido, un reste carboxyle, hydroxy, (alkyle en $C_1$ à $C_4$) carbonylamino, un reste benzoylamino éventuellement substitué par un radical alkyle en $C_1$ à $C_4$, alkoxy en $C_1$ à $C_4$, fluoro, chloro, bromo ou nitro ou un reste benzènesulfonylamino éventuellement substitué par un radical alkyle en $C_1$ à $C_4$, alkoxy en $C_1$ à $C_4$, fluoro, chloro, bromo ou nitro,

$R_5$ désigne l'hydrogène, un reste alkyle en $C_1$ à $C_4$, notamment méthyle, le fluor, le chlore ou le brome ou un reste hydroxy,

$R_6$ désigne l'hydrogène, le fluor, le chlore ou le brome, un groupe nitro, alkyle en $C_1$ à $C_4$, alkoxy en $C_1$ à $C_4$, alkylamino en $C_1$ à $C_4$, alkylmercapto en $C_1$ à $C_4$, un reste phénylmercapto éventuellement substitué par un radical alkyle en $C_1$ à $C_4$, alkoxy en $C_1$ à $C_4$, fluoro, chloro, bromo ou nitro, un reste (alkoxy en $C_1$ à $C_4$)-carbonyle, (alkyle en $C_1$ à $C_4$) carbonyle, benzylamino, cyclohexylamino, un reste phénylamino éventuellement substitué par un radical alkyle en $C_1$ à $C_4$, alkoxy en $C_1$ à $C_4$, chloro, bromo ou nitro, un reste carbamoyle éventuellement monosubstitué ou disubstitué par un radical alkyle en $C_1$ à $C_4$, benzyle ou phényle, le radical phényle pouvant être substitué par un radical alkyle en $C_1$ à $C_4$, alkoxy en $C_1$ à $C_4$, fluoro, chloro, bromo ou nitro, un reste (alkyle en $C_1$ à $C_4$) carbonylamino, un reste benzoylamino éventuellement substitué par un radical alkyle en $C_1$ à $C_4$, alkoxy en $C_1$ à $C_4$, fluoro, chloro, bromo ou nitro, un reste (alcane en $C_1$ à $C_4$) sulfonylamino ou un reste benzènesulfonylamino éventuellement substitué par un radical alkyle en $C_1$ à $C_4$, alkoxy en $C_1$ à $C_4$, fluoro, chloro, bromo ou nitro et

$R_7$ désigne l'hydrogène, le fluor, le chlore ou le brome ou un reste hydroxy.

5. Composés azoïques anthraquinoniques suivant la revendication 1, de formule

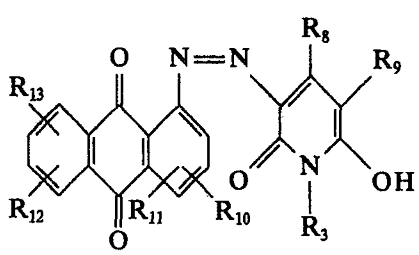

(VIII)

dans laquelle

$R_3$ a la définition mentionnée ci-dessus et

$R_8$ désigne l'hydrogène, un groupe méthyle ou hydroxy,

$R_9$ est l'hydrogène, un groupe cyano, un reste carbamoyle éventuellement monosubstitué ou disubstitué par un radical alkyle en $C_1$ à $C_4$ ou représente du chlore, $R_8$ et $R_9$ ne pouvant toutefois par

représenter ensemble de l'hydrogène,

$R_{10}$ désigne l'hydrogène, un groupe méthyle, du chlore, du brome, un groupe nitro, acétyle (alkoxy en $C_1$ à $C_4$) carbonyle, un reste carbamoyle éventuellement substitué par un radical alkyle en $C_1$ à $C_4$ ou phényle, le radical phényle pouvant être substitué par un radical alkyle en $C_1$ à $C_4$, alkoxy en $C_1$ à $C_4$, du chlore, du brome ou un radical nitro, un reste carboxy, (alkyle en $C_1$ à $C_4$) carbonylamino ou un reste benzoylamino éventuellement substitué par un radical alkyle en $C_1$ à $C_4$, alkoxy en $C_1$ à $C_4$, chloro, bromo ou nitro,

$R_{11}$ désigne l'hydrogène, un groupe méthyle ou un groupe hydroxy

$R_{12}$ désigne l'hydrogène, le chlore, le brome, un groupe nitro, hydroxy, (alkyle en $C_1$ à $C_4$)-carbonylamino, un reste benzoylamino éventuellement substitué par un radical alkyle en $C_1$ à $C_4$, alkoxy en $C_1$ à $C_4$, chloro, bromo ou nitro, un groupe carboxy, (alkoxy en $C_1$ à $C_4$) carbonyle ou un reste carbamoyle éventuellement substitué par un radical alkyle en $C_1$ à $C_4$ ou phényle, le radical phényle pouvant encore être substitué par un radical alkyle en $C_1$ à $C_4$, alkoxy en $C_1$ à $C_4$, chloro, bromo ou nitro et

$R_{13}$ désigne l'hydrogène, le chlore, un groupe hydroxy ou un groupe nitro.

6. Composés azoïques anthraquinoniques suivant la revendication 1, de formule

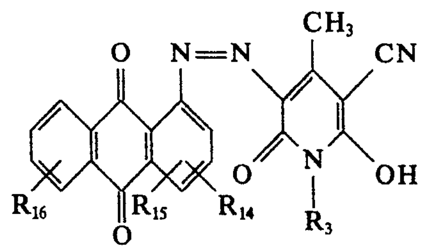

(IX)

dans laquelle

$R_3$ a la définition mentionnée ci-dessus et

$R_{14}$ désigne l'hydrogène, un groupe hydroxy ou un reste benzoylamino éventuellement substitué par du chlore ou un radical nitro,

$R_{15}$ est l'hydrogène ou un groupe méthyle et

$R_{16}$ désigne l'hydrogène, le chlore ou un reste benzoylamino éventuellement substitué par du chlore ou un radical nitro.

7. Composés azoïques anthraquinoniques de formule

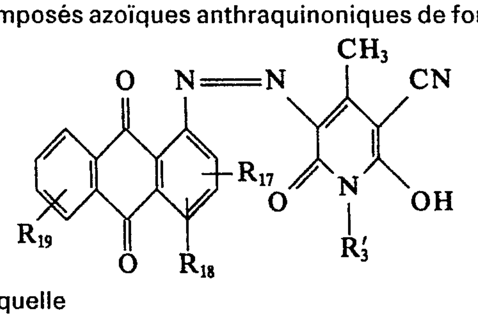

(XV)

dans laquelle

$R_3'$ est un groupe alkyle en $C_1$ à $C_6$ ou benzyle,

$R_{17}$ désigne l'hydrogène, un groupe hydroxy ou un reste benzoylamino éventuellement substitué par du chlore ou un radical nitro,

$R_{18}$ est l'hydrogène ou le groupe méthyle et

$R_{19}$ est l'hydrogène, le chlore ou un reste benzoylamino éventuellement substitué par du chlore ou un radical nitro.

8. Composés azoïques anthraquinoniques de formule

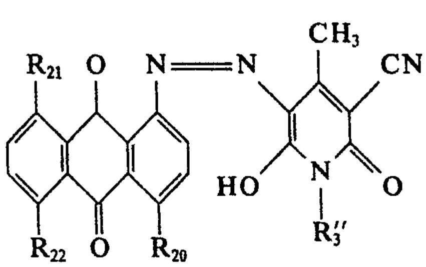

(XVI)

dans laquelle

$R_3''$ est un groupe alkyle en $C_1$ à $C_4$ et
$R_{20}$, $R_{21}$, $R_{22}$
désignent l'hydrogène ou un groupe benzoylamino, au maximum l'un des restes $R_{20}$, $R_{21}$, $R_{22}$ représentant alors un groupe benzoylamino.

9. Procédé de production de composés azoïques anthraquinoniques de formule (I), caractérisé en ce qu'on diazote des amino-anthraquinones de formule

$$A-NH_2 \quad (V)$$

dans laquelle A a la définition indiquée ci-dessus et on fait copuler le produit sur des copulants de formule

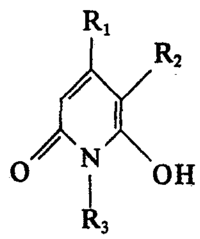

(VI)

dans laquelle $R_1$, $R_2$ et $R_3$ ont la définition indiquée ci-dessus.

10. Procédé de pigmentation de substances organiques macromoléculaires, caractérisé en ce qu'on utilise des composés azoïques anthraquinoniques suivant les revendications 1 à 8.